# FASCICULE DE BREVET EUROPEEN

(11) **EP 0 931 916 B1**
(45) Date de publication et mention de la délivrance du brevet: **02.11.2006**
(21) Numéro de dépôt: 99450006.4
(22) Date de dépôt: 27.01.1999
(51) Int. Cl.: F01P 11/12, F02M 35/08, B60K 11/08, B01D 46/52

(54) **Procédé et dispositif de commande de nettoyage d'une grille de filtration d'air**
Verfahren und Einrichtung zur Steuerung der Reinigung von einem Lüftungsrost
Process and device to control the cleaning operation of an air filtering grille

(30) Priorité: 28.01.1998 FR 9801175
(43) Date de publication de la demande: 28.07.1999
(73) Titulaire: Van de Velde, Marcel-Jean, 40000 Mont de Marsan (FR)
(72) Inventeur: Van de Velde, Marcel-Jean, 40000 Mont de Marsan (FR)
(74) Mandataire: Fantin, Laurent

(56) Documents cités:
- EP-A- 0 269 765
- WO-A-95/07748
- DE-A- 2 923 465
- US-A- 3 716 968

## Description

La présente invention a trait au nettoyage de grilles de filtration d'air de refroidissement de radiateurs de fluides liquides et gazeux et plus particulièrement de radiateurs équipant divers engins travaillant en atmosphère poussiéreuse et chargée de particules solides en suspension dans l'air.

Une application typique de l'invention est par exemple le nettoyage des grilles de radiateurs d'eau et d'huile de matériels mobiles, tels que des chargeurs, de compactage ou de terrassement pour le traitement des déchets ou le compactage de terres.

Les radiateurs de ces matériels sont équipés de grilles de filtration de l'air destiné au refroidissement des radiateurs et qui est forcé au travers desdites grilles.

Celles-ci sont percées d'un grand nombre de trous ou passages de faible dimension au travers desquels des poussières et particules solides en suspension dans l'air ne peuvent pas passer, obstruant ainsi plus ou moins fortement les grilles.

Périodiquement, il faut nettoyer la surface de ces grilles de filtration, en vue d'éliminer les impuretés qui y sont plaquées et retenues et on connaît déjà divers systèmes de nettoyage de ces grilles de filtration, par balais ou à l'aide de soufflettes dont le principe est bien connu.

Ces systèmes de nettoyage sont soit difficiles voire impossibles à monter, car encombrants, notamment sur des chargeurs, soit complexes de conception, d'utilisation et d'entretien.

On connaît d'après le document WO-95/07748 un dispositif de nettoyage d'une grille de filtration d'air dans lequel le nettoyage est effectué par soufflage à l'aide d'au moins une soufflette. Selon ce document, la commande de nettoyage est fonction de la vitesse du moteur. Dans tous les cas, le nettoyage est évité lorsque la vitesse du moteur est trop faible pour procurer un nettoyage efficace. Le nettoyage n'a lieu que lorsque le moteur a une vitesse supérieure à un seuil prédéterminé c'est-à-dire lorsque les impuretés sont plaquées avec un maximum de pression contre la grille.

On connaît d'après le document US-3.716.968 un dispositif de nettoyage d'un filtre dans lequel le nettoyage n'est déclenché qu'en fonction d'un degré encrassement prédéterminé. Ainsi, le nettoyage n'a lieu que lorsque les impuretés sont plaquées avec l'effort le plus important.

L'invention vise à pallier les inconvénients de l'art antérieur en proposant un moyen simple, efficace et apte à nettoyer périodiquement une grille de filtration d'air de façon automatique et efficace.

A cet effet, l'invention a pour objet un procédé de commande de nettoyage d'une grille de filtration d'air de refroidissement de radiateur, à travers laquelle l'air de refroidissement est forcé à l'aide d'un système de ventilation, le nettoyage étant effectué par soufflage à l'aide d'au moins une soufflette balayant tangentiellement la surface de la grille, caractérisé en ce qu'il consiste à commander ladite soufflette lorsque le régime ou le flux du système de ventilation est égal ou inférieur à un niveau prédéterminé de manière à ce que la pression plaquant les particules sur la grille occasionnée par le flux d'air forcé par le système de ventilation soit minimale.

Suivant un mode de mise en oeuvre du procédé ci-dessus, plus particulièrement destiné à des engins du type chargeur ou analogue, ledit paramètre est un signal généré lors du passage du sélecteur de vitesses en position de marche arrière, ce signal pouvant être, dans le cas où l'engin est équipé d'un avertisseur de recul, le courant d'actionnement de ce dernier.

L'invention a également pour objet un dispositif pour la mise en oeuvre du procédé selon la revendication 5.

Suivant une application de l'invention à des engins, du type chargeur ou analogue, équipé ou non d'un avertisseur de recul et dont le système de ventilation est mû par le moteur de l'engin, lesdits moyens activés en fonction du régime du système de ventilation sont constitués par un temporisateur activant pendant une durée prédéterminée un relais d'alimentation d'une électrovanne autorisant l'envoi d'air sous pression dans ladite soufflette, ledit temporisateur étant mis en service par un signal généré par le sélecteur de vitesses de l'engin, de façon que la soufflette soit mise en service à chaque fois que le sélecteur est actionné en marche arrière, c'est-à-dire concomitamment avec un régime minimal dudit système de ventilation, le moteur de l'engin étant décéléré.

Avantageusement, la soufflette n'est actionnée que si la pression de l'air dans ledit réservoir se trouve au dessus d'un niveau prédéterminé.

Le dispositif de l'invention assure ainsi un dépoussiérage à la fois automatique et efficace, d'une part grâce à la configuration ondulée de la grille de filtration, qui accroît la surface de filtration et, d'autre part, par le placement des gicleurs de la soufflette à une extrémité des sillons en U de la grille, assurant ainsi un balayage tangentiel puissant sur toute la surface du sillon et toute sa longueur.

Un tel balayage est systématiquement commandé dès que, lorsque l'engin est en activité, le régime de ventilation de forçage de l'air de refroidissement du ou des radiateurs, d'eau ou d'huile ou de tout autre fluide liquide ou gazeux, est suffisamment bas et en particulier lorsqu'il est minimal, ce qui est le cas notamment à chaque manipulation du sélecteur de vitesses pour passer en marche arrière, le moteur de l'engin étant nécessairement décéléré et donc le système de ventilation, lié au régime du moteur de l'engin, également au régime minimal.

Dans le cas de l'application de l'invention à des engins du type chargeur ou analogue dont le système de ventilation est mû indépendamment du moteur de l'engin, la commande de la soufflette sera déclenchée par exemple à partir d'une commande programmée ou non, périodique ou non, du système de ventilation. Cette commande du système de ventilation peut consister, par exemple en une mise en drapeau provisoire, de l'ordre de quelques secondes, des pales du système de ventilation, ladite mise en drapeau entraînant l'actionnement de ladite soufflette.

D'autres caractéristiques et avantages ressortiront de la description qui va suivre d'un mode de mise en oeuvre du procédé de l'invention, description donnée à titre d'exemple uniquement et en regard des dessins annexés sur lesquels :
- Figure 1 est une vue schématique partielle d'un engin du type chargeur ;
- Figure 2 est une vue partielle en perspective d'une grille de filtration selon l'invention ;
- Figure 3 est un schéma d'un mode préféré de réalisation du dispositif de l'invention appliqué à un engin équipé d'un avertisseur sonore de recul, et ;
- Figure 4 est un schéma de commande d'une soufflette à partir d'une électrovanne elle-même commandée à partir du moteur d'actionnement du système de ventilation.

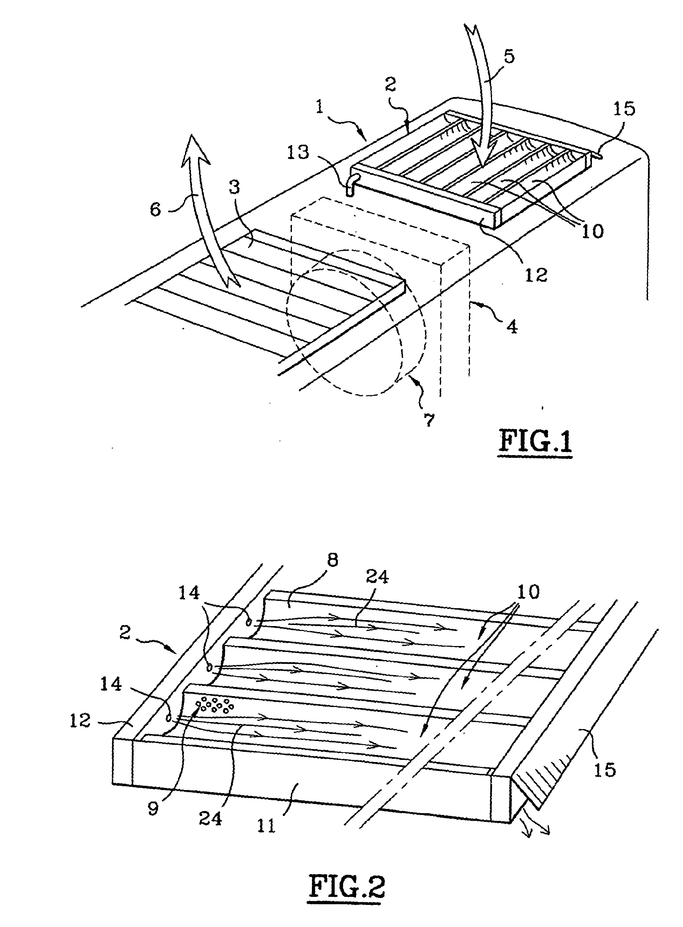

Sur la figure 1, on a représenté schématiquement et partiellement la partie avant d'un chargeur et plus précisément la partie avant supérieure du capot 1 du moteur, sur la face supérieure, sensiblement horizontale, duquel s'ouvrent, à l'extrémité avant, des ouïes d'introduction d'air, recouvertes d'une grille de filtration d'air 2 conforme à l'invention.

En retrait s'ouvrent les ouïes de la grille 3 de sortie d'air.

Sous le capot 1, entre les deux grilles 2, 3 se trouve le radiateur 4 de refroidissement d'eau ou de tout autre fluide nécessaire à l'engin.

L'air d'entrée 5 est aspiré et forcé au travers de la grille 2, puis du radiateur 4 et enfin de la grille 3 pour être rejeté en 6, par l'intermédiaire d'un système de ventilation symbolisé en 7, généralement entraîné par le moteur de l'engin.

En se reportant aux figures 1 et 2, la grille 2 de filtration de l'air d'entrée 5 est constituée par une plaque métallique 8 percée ou ajourée d'un grand nombre de petits trous 9 et pliée de façon à délimiter des sillons parallèles 10 en forme d'auge.

La plaque 8 qui présente ainsi un profil transversal ondulé est fixée par tous moyens appropriés sur un cadre métallique rectangulaire 11, lui-même monté sur le capot 1.

Les sillons 10 sont orientés dans la direction de déplacement de l'engin et sont balayés en air sous pression par une soufflette 12 disposée transversalement aux sillons 10 à leur extrémité tournée vers l'arrière du capot 1.

La soufflette 12 est intégrée dans le bord arrière du cadre 11 et comprend un conduit (non représenté) intégré dans le cadre et relié par une canalisation 13 (figure 1) à une source d'air comprimé, typiquement la réserve sous pression dont sont habituellement équipés les engins de ce genre.

En regard de l'entrée de chaque sillon 10, la soufflette 12 est munie de gicleurs 14 ou analogues.

A l'extrémité avant, le cadre 11 est ouvert pour laisser échapper l'air de balayage, dirigé vers le bas par une plaque déflectrice 15 fixé au cadre.

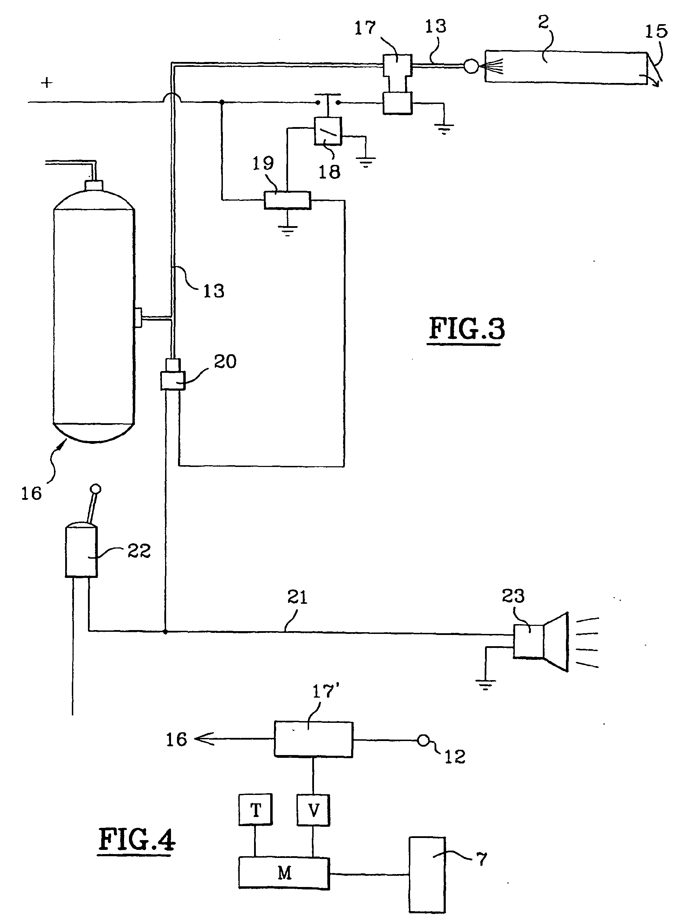

La figure 3 est un schéma des moyens de commande de la soufflette 12, conformément à l'invention.

La soufflette 12 est reliée par la canalisation 13 au réservoir d'air sous pression 16 de l'engin, via une électrovanne 17 commandée par un relais 18 lui-même activé par un temporisateur 19.

Le temporisateur 19 est relié, à travers un mano-contact 20 piqué sur la canalisation 13, au conducteur 21 reliant le sélecteur de vitesses 22 de l'engin à un avertisseur sonore de recul 23 dont est équipé ce dernier.

En fonctionnement normal de l'engin, l'aspiration d'air de refroidissement 5 du radiateur 4 du moteur provoque une pression sur la surface extérieure de la grille de filtration d'air 8 entraînant le colmatage de celle-ci par des poussières et déchets divers. Lors du passage en marche arrière de l'engin, la chute du régime moteur entraîne pratiquement la disparition de cette pression, permettant ainsi, pendant ce court instant, de procéder automatiquement au nettoyage de la grille par le dispositif de l'invention.

Lorsque l'on actionne le sélecteur de vitesses 22 en marche arrière, pour raison de sécurité, un courant est délivré vers l'avertisseur sonore de recul 23 par le conducteur 21.

Ce courant appelé courant de pilotage est utilisé, conformément à l'invention, pour actionner le temporisateur 19 qui lui-même assure l'alimentation en courant du relais 18 pendant 10 secondes par exemple, cette durée étant bien entendu réglable. Ce relais 18 délivre pendant ce même laps de temps le courant d'alimentation à l'électrovanne 17 qui laisse libre le passage de l'air sous pression vers la soufflette 12.

Les gicleurs, trous ou buses 14, qui sont calibrés, envoient dans l'axe des sillons 10 un jet puissant 24 balayant tangentiellement toute la surface des sillons sur toute leur longueur. Ce jet est d'autant plus efficace qu'il se produit précisément au moment où la pression plaquant les particules sur la grille occasionnée par le flux d'air forcé par le ventilateur 7 est minimale, puisque le régime de ce dernier est directement lié à celui du moteur, nécessairement au ralenti lors du changement de vitesses.

A chaque fois que la marche arrière de l'engin sera passée, il en sera ainsi, automatiquement, pour autant que la pression, détectée par le mano-contact 20, soit suffisante dans le réservoir 16.

Le mano-contact 20 évite des sollicitations trop rapprochées qui videraient la réserve d'air sous pression. Il est dans une certaine mesure optionnel et peut être supprimé si le réservoir 16 est suffisant.

Le dispositif de l'invention est non seulement efficace, mais économique en air comprimé.

Le paramètre commandant l'actionnement de l'électrovanne 17 est, ici, le passage de la marche arrière de l'engin. Dans les conditions d'utilisation habituelles de ces engins, les marches arrière sont suffisamment nombreuses pour assurer un décolmatage suffisant.

Il est à noter qu'en l'absence d'avertisseur de recul 23, le sélecteur de vitesses 22 de l'engin peut être muni d'un moyen générant un signal à chaque passage en position de marche arrière, ce signal étant envoyé au mano-contact 20.

Le paramètre ci-dessus est lié, indirectement, au régime du ventilateur 7, du fait que les passages de la marche arrière et les mises au régime minimal du ventilateur sont concomitants.

Le paramètre commandant l'électrovanne 17 peut être un paramètre lié plus directement au régime dudit ventilateur 7.

C'est ainsi que ladite électrovanne 17 pourrait être commandée à chaque fois que ledit régime atteint en descendant une valeur prédéterminée ou la dépasse, par exemple à l'aide de moyens indicatifs de la vitesse de rotation du ventilateur, reliés à l'électrovanne.

Ceci pourrait être mis en oeuvre également dans le cas où le ventilateur 7 n'est pas entraîné par le moteur de l'engin, mais par un moteur indépendant, hydraulique ou électrique par exemple.

La figure 4 illustre une telle commande de l'électrovanne 17' alimentée en air par le réservoir 16. A cet effet, une minuterie T commande par exemple périodiquement l'arrêt momentané du moteur M (électrique ou hydraulique par exemple) d'entraînement du ventilateur 7. A chaque fois que le régime du moteur M, mesuré par un capteur de vitesse V, atteint en descendant un seuil prédéterminé, réglable, ledit capteur V génère un signal commandant l'actionnement de ladite électrovanne 17', cette dernière étant fermée lorsque le régime du moteur M repasse en remontant ledit seuil prédéterminé.

Par ailleurs, l'électrovanne 17 de la figure 3 pourrait être commandée à partir d'un signal généré par le passage du sélecteur de vitesses 22 en marche arrière, le signal commandant l'actionnement de l'électrovanne 17, ainsi que l'arrêt momentané du moyen d'entraînement dudit ventilateur 7. Dans ce cas, la commande de l'électrovanne 17 est retardée par rapport à la commande d'arrêt du ventilateur afin que l'électrovanne ne soit déclenchée qu'après l'atteinte par le régime du ventilateur d'un niveau suffisamment bas, afin de tenir compte de l'inertie du système.

Toujours dans le cas où le ventilateur 7 n'est pas entraîné par le moteur de l'engin mais par un moteur indépendant, on peut déclencher la soufflette 12 par exemple à partir d'une commande programmée ou non, périodique ou non du système de ventilation.

Cette commande du système de ventilation peut consister par exemple en une mise en drapeau provisoire, de l'ordre de quelques secondes, des pales du ventilateur 7, ladite mise en drapeau entraînant l'actionnement de ladite soufflette.

Cette commande du système de ventilation peut également se faire par la coupure d'alimentation électrique ou hydraulique du moyen moteur suivant que le système est constitué par un ventilateur ou une turbine à commande électrique ou hydraulique.

Comme autre paramètre de commande de l'électrovanne 17, on pourrait également prendre en compte la commande de la pompe à injection du moteur, le ventilateur 7 étant entraîné par ce même moteur.

Dans ce cas, en effet, le régime du ventilateur est directement lié à la commande de ladite pompe à injection.

L'orientation des sillons 10 par rapport au capot 1 peut être différente, de même que l'emplacement de la soufflette le long de l'un des côtés du cadre 11.

Si les sillons 10 présentent une longueur importante, on peut envisager une soufflette à chaque extrémité, les deux fonctionnant en alternance.

Enfin, l'invention n'est évidemment pas limitée aux modes de réalisation représentés et décrits ci-dessus, mais en couvre au contraire toutes les variantes, tant en ce qui concerne les formes, dimensions et agencements des sillons, du cadre et de la soufflette de la grille de filtration 2, que l'implantation de cette dernière sur l'engin selon la nature et l'emplacement du radiateur à équiper et des types de brassage d'air, par aspiration ou pulsion.

De même, bien des variantes peuvent être envisager en ce qui concerne les moyens d'actionnement de la ou des soufflettes, ainsi que le paramètre de commande lié à la vitesse de rotation du ventilateur de forçage de l'air de refroidissement.

## Revendications

1. Procédé de commande de nettoyage d'une grille (2) de filtration d'air de refroidissement de radiateur (4), l'air de refroidissement (5) étant forcé à l'aide d'un système de ventilation (7) et le nettoyage étant effectué par à l'aide d'au moins une soufflette (12) balayant tangentiellement la surface de la grille (2), **caractérisé en ce qu'**il consiste à commander ladite soufflette (12) lorsque le régime ou le flux du système de ventilation est égal ou inférieur à un niveau prédéterminé de manière à ce que la pression plaquant les particules sur la grille (2) occasionnée par le flux d'air forcé par le système de ventilation (7) soit minimale.

2. Procédé suivant la revendication 1, plus Particulièrement destiné à des engins du type chargeur ou analogue, **caractérisé en ce qu'**il consiste commander ladite soufflette (12) en fonction d'un paramètre lié à un signal généré lors du passage d'un sélecteur de vitesses (22) en position de marche arrière.

3. Procédé suivant la revendication 2, plus particulièrement destiné à des engins du type chargeur ou analogue équipé d'un avertisseur de recul (23) relié électriquement au sélecteur de vitesses (22), **caractérisé en ce que** ledit signal est le courant d'actionnement de l'avertisseur de recul (23).

4. Procédé suivant l'une des revendications 1 à 3, **caractérisé en ce que** ladite mise en fonctionnement de la soufflette (12) est effectuée pendant une durée prédéterminée, réglable.

5. Dispositif pour la mise en oeuvre du procédé selon la revendication 1, plus particulièrement destiné à un engin dans lequel l'air de refroidissement est forcé à l'aide d'un système de ventilation (7), ledit dispositif comprenant une grille de filtration (2), sur au moins un côté de laquelle est disposée une soufflette tangentielle et une réserve d'air comprimé (16), reliée à ladite soufflette via un dispositif électromécanique de commande (17), **caractérisé en ce que** ledit dispositif (17) de commande de la soufflette est relié à des moyens (21) activés en fonction du régime ou flux du système de ventilation (7), lorsque ledit régime ou flux est réduit à néant ou presque de manière à ce que la pression plaquant les particules sur la grille (2) occasionnée par le flux d'air forcé par la système de ventilation (7) soit minimale,

6. Dispositif suivant la revendication 5, plus particulièrement destiné à des engins, du type chargeur ou analogue, équipés ou non d'un avertisseur de recul (23) et dont le système de ventilation (7) est mû par le moteur de l'engin, **caractérisé en ce que** lesdits moyens activés en fonction du régime du système de ventilation (7) sont constitués par un temporisateur (19) activant, pendant une durée prédéterminée, un relais (18) d'alimentation d'une électrovanne (17) autorisant l'envoi d'air sous pression dans ladite soufflette (12), ledit temporisateur (19) étant mis en service par un signal généré par le sélecteur de vitesses (22), de façon que la soufflette (12) soit mise en service à chaque fois que le sélecteur est actionné en marche arrière, c'est-à-dire concomitamment avec un régime minimal dudit système de ventilation (7), le moteur de l'engin étant décéléré.

7. Dispositif suivant la revendication 5, plus particulièrement destiné à des engins, du type chargeur ou analogue, équipés ou non d'un avertisseur de recul et dont le système de ventilation (7) est mû indépendamment du moteur de l'engin, **caractérisé en ce que** les moyens activés en fonction du régime ou du flux du système de ventilation (7) sont constitués par un temporisateur (19) activant un relais (18) d'alimentation d'une électrovanne (17) autorisant l'envoi d'air sous pression dans ladite soufflette (12), ledit temporisateur (19) étant mis en service par un signal généré par un sélecteur de vitesses (22), de façon que la soufflette (12) soit mise en service à chaque fois que le sélecteur est actionné en marche arrière, ledit signal généré par le sélecteur de vitesses (22) commandant, d'une part, l'actionnement de ladite électrovanne (17) et, d'autre part, un arrêt momentané dudit système de ventilation, la commande de l'électrovanne étant différée par rapport à celle du système de ventilation.

8. Dispositif suivant la revendication 5, plus particulièrement destiné à des engins du type chargeur ou analogue dont le système de ventilation (7) est mû par un moteur (M) indépendant du moteur de l'engin, **caractérisé en ce que** les moyens activés en fonction du régime ou flux du système de ventilation (7) sont constitués par une électrovanne (17') autorisant l'envoi d'air sous pression dans ladite soufflette (12), l'électrovanne (17') étant actionnée à partir d'un capteur de vitesse (V) associé audit moteur (M) d'entraînement du système de ventilation (7), sous la commande périodique d'une minuterie (T) d'arrêt momentanée dudit moteur (M).

9. Dispositif suivant la revendication 5, plus particulièrement destiné à des engins du type chargeur ou analogue dont le système de ventilation (7) est mû indépendamment du moteur de l'engin, **caractérisé en ce que** les moyens activés en fonction du régime ou flux du système de ventilation (7) sont constitués par une électrovanne (17) autorisant l'envoi d'air sous pression dans ladite soufflette (12), déclenchée à partir d'une commande programmée ou non, périodique ou non, dudit système de ventilation (7).

10. Dispositif suivant la revendication 9, **caractérisé en ce que** ladite commande du système de ventilation est une mise en drapeau provisoire, de l'ordre de quelques secondes, des pales du ventilateur (7), ladite mise en drapeau entraînant l'actionnement de ladite soufflette (12), ou un arrêt de l'ordre de quelques secondes du moteur dudit système de ventilation.

11. Dispositif suivant l'une des revendications 5 à 10, **caractérisé en ce que** la soufflette (12) n'est actionnée que si la pression de l'air dans ledit réservoir (16) se trouve au dessus d'un niveau prédéterminé.

12. Dispositif suivant l'une des revendications 5 à 11, **caractérisé en ce que** la grille de filtration (2) est constituée d'une plaque métallique ajourée (8) fixée sur un cadre (11).

13. Dispositif suivant la revendication 12, **caractérisé en ce que** ledit cadre (11) est apte à être rapporté rapporte sur l'engin, au droit des ouïes d'entrée d'air (5) de refroidissement.

14. Dispositif suivant l'une des revendications 5 à 10, **caractérisé en ce que** la grille de filtration (2) a une section transversale suivant un profil ondulé, la soufflette (12) étant disposée à l'une des extrémités de chaque sillon en forme d'auge (10) formé par la grille.

## Claims

1. A method of controlling the cleaning of a filtration grille (2) for cooling air of a radiator (4), the cooling air (5) being forced by means of a ventilation system (7) and the cleaning being effected by blowing by means of at least one blower (12) tangentially sweeping the surface of the grille (2), **characterised in that** it comprises controlling said blower (12) when the operating level or flow of the ventilation system is equal to or less than a predetermined level so that the pressure pressing the particles on the grille (2) caused by the air flow forced by the ventilation system (7) is minimal.

2. A method according to claim 1, more particularly intended for machines of the loader type or similar, **characterised in that** it comprises controlling said blower (12) according to a parameter relating to a signal generated when a gear selector (22) passes into a reversing position.

3. A method according to claim 2, more particularly intended for machines of the loader type or similar equipped with a reversing warning device (23) electrically connected to the gear selector (22), **characterised in that** said signal is the current actuating the reversing warning device (23).

4. A method according to one of claims 1 to 3, **characterised in that** said putting of the blower (12) into operation is effected for a predetermined adjustable period.

5. A device for implementing the method according to claim 1, more particularly intended for a machine in which the cooling air is forced by means of a ventilation system (7), said device comprising a filtration grille (2), on at least one side of which there is disposed a tangential blower (12) and a compressed air reserve (16), coupled to said blower via an electromechanical control device (17), **characterised in that** said device (17) controlling the blower is coupled to means (21) activated according to the operating level or flow of the ventilation system (7), when said operating level or flow is reduced to nothing or almost nothing so that the pressure pressing the particles on the grille (2) caused by the air flow forced by the ventilation system (7) is minimal.

6. A device according to claim 5, more particularly intended for machines, of the loader type or similar, equipped or not with a reversing warning device (23) and whose ventilation system (7) is moved by the engine of the machine, **characterised in that** said means activated according to the operating level of the ventilation system (7) include a timer (19) activating, for a predetermined period, a relay (18) supplying a solenoid valve (17) enabling the sending of pressurised air into said blower (12), said timer (19) being activated by a signal generated by the gear selector (22), so that the blower (12) is activated whenever the selector is actuated in reverse, that is to say concomitantly with a minimum operating level of said ventilation system (7), the engine of the machine being decelerated.

7. A device according to claim 5, more particularly intended for machines, of the loader type or similar, equipped or not with a reversing warning device and whose ventilation system (7) is moved independently of the engine of the machine, **characterised in that** the means activated according to the operating level or flow of the ventilation system (7) include a timer (19) activating a relay (18) supplying a solenoid valve (17) enabling the sending of pressurised air into said blower (12), said timer (19) being activated by a signal generated by a gear selector (22), so that the blower (12) is activated whenever the selector is actuated in reverse, said signal generated by the gear selector (22) controlling one the one hand the actuation of said solenoid valve (17) and on the other hand a momentary stoppage of said ventilation system, the control of the solenoid valve being deferred with respect to that of the ventilation system.

8. A device according to claim 5, more particularly intended for machines, of the loader type or similar, whose ventilation system (7) is moved by a motor (M) independent of the engine of the machine, **characterised in that** the means activated according to the operating level or flow of the ventilation system (7) include a solenoid valve (17') enabling the sending of pressurised air into said blower (12), the solenoid valve (17') being actuated from a speed sensor (V) associated with said motor (M) driving the ventilation system (7), under the periodic control of a timing device (T) for the momentary stoppage of said motor (M).

9. A device according to claim 5, more particularly intended for machines, of the loader type or similar, whose ventilation system (7) is moved independently of the engine of the machine, **characterised in that** the means activated according to the operating level or flow of the ventilation system (7) include a solenoid valve (17) enabling the sending of pressurised air into said blower (12), triggered from a command, programmed or not, periodic or not, for said ventilation system (7).

10. A device according to claim 9, **characterised in that** said ventilation system command is a temporary feathering, of around a few seconds, of the blades of the fan (7), said feathering causing the actuation of said blower (12), or a stoppage of the motor of said ventilation system of around a few seconds.

11. A device according to one of claims 5 to 10, **characterised in that** the blower (12) is actuated only if the pressure of the air in said reservoir (16) is above a predetermined level.

12. A device according to one of claims 5 to 11, **characterised in that** the filtration grille (12) is formed of a perforated metal plate (8) fixed to a frame (11).

13. A device according to claim 12, **characterised in that** said frame (11) is able to be on the machine, in line with the cooling air inlet apertures (5).

14. A device according to one of claims 5 to 10, **characterised in that** the filtration grille (2) has a transverse section in an undulating profile, the blower (12) being disposed at one of the ends of each groove in the form of a trough (10) formed by the grille.

## Patentansprüche

1. Verfahren zur Steuerung der Reinigung eines Rosts (2) zum Filtern von Kühlungsluft eines Kühlers (4), wobei die Kühlungsluft (5) mittels eines Ventilationssystems (7) beschleunigt wird und die Reinigung durch Blasen mittels wenigstens einer Blaseinrichtung (12), die tangential die Oberfläche des Rosts (2) überstreicht, durchgeführt wird, **dadurch gekennzeichnet, dass** es darin besteht, die Blaseinrichtung (12) zu betätigen, wenn die Drehzahl oder der Fluss des Ventilätionssystems auf oder unter einer vorbestimmten Höhe ist, damit der Druck, der die Partikel auf das Rost (2) drückt und von dem Luftstrom hervorgerufen wird, der von dem Ventilationssystem (7) beschleunigt wird, minimal ist.

2. Verfahren gemäß Anspruch 1, welches insbesondere für Maschinen der Art Beladevorrichtung oder Ähnliches bestimmt ist, **dadurch gekennzeichnet, dass** es darin besteht, die Blaseinrichtung (12) in Abhängigkeit von einem Parameter zu steuern, der mit einem Signal verbunden ist, das bei dem Bewegen eines Gangwählers (22) in die Rückwärtsgang-Position erzeugt wird.

3. Verfahren gemäß Anspruch 2, welches insbesondere für Maschinen der Art Beladevorrichtung oder Ähnliches bestimmt ist, die mit einem Rücklaufwarner (23) ausgestattet sind, der elektrisch mit dem Gangwähler (22) verbunden ist, **dadurch gekennzeichnet, dass** das Signal der Strom zur Betätigung des Rücklaufwarners (23) ist.

4. Verfahren gemäß einem der Ansprüche 1 bis 3, **dadurch gekennzeichnet, dass** das Inbetriebsetzen der Blaseinrichtung (12) während einer vorbestimmten, einstellbaren Dauer durchgeführt wird.

5. Vorrichtung zur Durchführung des Verfahrens gemäß Anspruch 1, insbesondere für eine Maschine, in welcher die Kühlungsluft mittels eines Ventilationssystems (7) beschleunigt wird, wobei die Vorrichtung einen Filterrost (2), bei dem auf wenigstens einer Seite eine tangentielle Blaseinrichtung (12) angeordnet ist, sowie einen Druckluftbehälter (16), der mit der Blaseinrichtung durch eine elektromechanische Vorrichtung zur Steuerung (17) verbunden ist, aufweist, **dadurch gekennzeichnet, dass** die Vorrichtung (17) zur Steuerung der Blaseinrichtung mit Mitteln (21) verbunden ist, die entsprechend der Drehzahl oder dem Fluss des Ventilationssystems (7) betätigt werden, wenn die Drehzahl oder der Fluss vollständig oder fast vollständig reduziert ist, damit der Druck, der die Partikel auf das Rost (2) drückt und von dem Luftstrom hervorgerufen wird, der von dem Ventilationssystem (7) beschleunigt wird, minimal ist.

6. Vorrichtung gemäß Anspruch 5, insbesondere für Maschinen der Art Beladevorrichtung oder Ähnliches bestimmt, die mit einem Rücklaufwarner (23) ausgestattet sind oder nicht und deren Ventilationssystem (7) von dem Motor der Maschine betrieben wird, **dadurch gekennzeichnet, dass** die entsprechend der Drehzahl des Ventilationssystems (7) betätigten Mittel aus einer Schaltuhr (19) gebildet sind, die während einer vorbestimmten Dauer ein Relais (18) zur Versorgung eines Elektroventils (17) betätigt, das das Einführen von Druckluft in die Blaseinrichtung (12) ermöglicht, wobei die Schaltuhr (19) durch ein Signal in Betrieb gesetzt wird, das von dem Gangwähler (22) erzeugt wird, so dass die Blaseinrichtung (12) jedes Mal in Betrieb gesetzt wird, wenn der Wähler in den Rückwärtsgang gebracht wird, das heißt, gleichzeitig mit einer minimalen Drehzahl des Ventilationssystems (7), wobei der Motor der Maschine abgebremst ist.

7. Vorrichtung gemäß Anspruch 5, insbesondere für Maschinen der Art Beladevorrichtung oder Ähnliches bestimmt, die mit einem Rücklaufwarner ausgestattet sind oder nicht und deren Ventilationssystem (7) unabhängig von dem Motor der Maschine betrieben wird, **dadurch gekennzeichnet, dass** die entsprechend der Drehzahl oder des Flusses des Ventilationssystems (7) betätigten Mittel aus einer Schaltuhr (19) gebildet sind, die während einer vorbestimmten Dauer ein Relais (18) zur Versorgung eines Elektroventils (17) betätigt, das das Einführen von Druckluft in die Blaseinrichtung (12) ermöglicht, wobei die Schaltuhr (19) durch ein Signal in Betrieb gesetzt wird, das von einem Gangwähler (22) erzeugt wird, so dass die Blaseinrichtung (12) jedes Mal in Betrieb gesetzt wird, wenn der Wähler in den Rückwärtsgang gebracht wird, wobei das von dem Gangwähler (22) erzeugte Signal einerseits das Betätigen des Elektroventils (17) und andererseits einen kurzen Stillstand des Ventilationssystems steuert, wobei die Betätigung des Elektroventils bezogen auf die des Ventilationssystems verzögert ist.

8. Vorrichtung gemäß Anspruch 5, insbesondere für Maschinen der Art Beladevorrichtung oder Ähnliches bestimmt, deren Ventilationssystem (7) von einem von dem Motor der Maschine unabhängigen Motor (M) betrieben wird, **dadurch gekennzeichnet, dass** die entsprechend der Drehzahl oder des Flusses des Ventilationssystems (7) betätigten Mittel aus einem Elektroventil (17') gebildet sind, das das Einführen von Druckluft in die Blaseinrichtung (12) ermöglicht, wobei das Elektroventil (17') von einem Geschwindigkeitssensor (V), der dem Motor (M) zum Betreiben des Ventilationssystems (7) zugeordnet ist, unter periodischer Steuerung eines Zeitschalters (T) für den kurzen Stillstand des Motors (M) betätigt wird.

9. Vorrichtung gemäß Anspruch 5, insbesondere für Maschinen der Art Beladevorrichtung oder Ähnliches bestimmt, deren Ventilationssystem (7) unabhängig von dem Motor der Maschine betrieben wird, **dadurch gekennzeichnet, dass** die entsprechend der Drehzahl oder des Flusses des Ventilationssystems (7) betätigten Mittel aus einem Elektroventil (17) gebildet sind, das das Einführen von Druckluft in die Blaseinrichtung (12) ermöglicht, ausgelöst von einer Steuerung, die programmiert ist oder nicht, periodisch oder nicht, des Ventilationssystems (7).

10. Vorrichtung gemäß Anspruch 9, **dadurch gekennzeichnet, dass** die Steuerung für das Ventilationssystem eine vorübergehende Verstellung im Bereich von einigen Sekunden der Flügel des Ventilators (7) ist, wobei die Verstellung das Betätigen der Blaseinrichtung (12) oder einen Stop im Bereich von einigen Sekunden des Motors des Ventilationssystems bewirkt.

11. Vorrichtung gemäß einem der Ansprüche 5 bis 10, **dadurch gekennzeichnet, dass** die Blaseinrichtung (12) nicht betätigt wird, wenn der Druck der Luft in dem Behälter (16) unterhalb einer vorbestimmten Höhe ist.

12. Vorrichtung gemäß einem der Ansprüche 5 bis 11, **dadurch gekennzeichnet, dass** das Filterrost (2) aus einer gelochten Metallplatte (8), die auf einem Rahmen (11) befestigt ist, besteht.

13. Vorrichtung gemäß Anspruch 12, **dadurch gekennzeichnet, dass** der Rahmen (11) geeignet ist, an die Maschine gegenüber der Saugöffnung des Lufteinlasses (5) zur Kühlung angesetzt zu werden.

14. Vorrichtung gemäß einem der Ansprüche 5 bis 10, **dadurch gekennzeichnet, dass** der Filterrost (2) einen Querschnitt entsprechend einem Wellenprofil aufweist, wobei die Blaseinrichtung (12) an einem der Enden jeder der von dem Rost gebildeten muldenförmigen Rillen (10) angeordnet ist.
